# NEUE EUROPÄISCHE PATENTSCHRIFT

(11) **EP 1 037 295 B2**
(45) Veröffentlichungstag und Bekanntmachung des Hinweises auf die Entscheidung über den Einspruch: **14.12.2005**
(45) Hinweis auf die Patenterteilung: 13.06.2001
(21) Anmeldenummer: 99108791.7
(22) Anmeldetag: 03.05.1999
(51) Int. Cl.: H01M 8/10, C25B 9/10

(54) **Verfahren zum Aufbringen von Elektrodenschichten auf eine bandförmige Polymerelektrolytmembran für Brennstoffzellen**
Method for applying electrode layers on a tape-like polymer electrolyte membrane for fuel cells
Méthode pour déposer des couches d'électrodes sur une membrane en électrolyte polymérique sous forme de ruban pour piles à combustible

(30) Priorität: 11.03.1999 DE 19910773
(43) Veröffentlichungstag der Anmeldung: 20.09.2000
(73) Patentinhaber: Umicore AG & Co. KG, 63457 Hanau-Wolfgang (DE)
(72) Erfinder: Starz, Karl-Anton Dr., 63517 Rodenbach (DE); Zuber, Ralf Dr., 63762 Grossostheim (DE); Göttenauer Wolfgang Dr., 63486 Bruchköbel (DE); Fehl, Knut, 36381 Schlüchtern-Raumholz (DE); Diehl, Manfred Dr., 60389 Frankfurt (DE)
(74) Vertreter: Stellbrink, Axel

(56) Entgegenhaltungen:
- EP-A- 0 731 520
- WO-A-92/15121
- WO-A-97/23916
- WO-A-99/19929
- DE-A- 19 509 748
- DE-A- 19 611 510
- JP-A- 1 064 574
- US-A- 4 172 353
- US-A- 4 822 544
- US-A- 5 211 984
- PATENT ABSTRACTS OF JAPAN vol. 098, no. 008, 30. Juni 1998 (1998-06-30) & JP 10 064574 A (FUJI ELECTRIC CO LTD), 6. März 1998 (1998-03-06) -& DATABASE WPI Derwent Publications Ltd., London, GB; AN 98-222669 XP002110924
- Zawodzinski et al: "Characterisation of polymer electrolytes for fuel cell applications", Solid State Ionics, Vol. 60 (1993), 199-211
- Hsu et al: Ion Transport and Clustering in Nafion (registered trademark) perfluorinated membranes", Journal of membrane Science, Vol. 13, (1983)
- Du Pont: product information sheet for the Nafion (registered trademark) membranes NE-112, NE-1135, N-115 and N-117
- Du Pont: product information sheet for the Nafion (registered trademark) membranes NR-111 + NR-112
- European Patent Register Excerpt: WO 99/19929
- "Development of the BAM Membrane for fuel cell applications", Proceedings of New Materials for Fuel Cell and Modern Battery Systems II"; Montreal, CA, July 6-10, 1997, Seite 792 bis 807
- "Emerging membranes for electrochemical systems: (I) solid polymer electrolyte membranes for fuel cell systems", O. Savadogo, Journal of New Materials for Electrochemical systems I, 47-66 (1998)
- James et al: "Hydration of Nafion (registered trademark) studied by AFM and X-ray scattering", Journal of Materials Science, Vol. 35, (2000), 5111-5119

## Beschreibung

Die Erfindung betrifft ein Verfahren zum Aufbringen von Elektrodenschichten auf eine bandförmige Polymerelektrolytmembran in einem gewünschten Muster.

Brennstoffzellen wandeln einen Brennstoff und ein Oxidationsmittel örtlich voneinander getrennt an zwei Elektroden in Strom, Wärme und Wasser um. Als Brennstoff kann Wasserstoff oder ein wasserstoffreiches Gas, als Oxidationsmittel Sauerstoff oder Luft dienen. Der Vorgang der Energieumwandlung in der Brennstoffzelle zeichnet sich durch einen besonders hohen Wirkungsgrad aus. Aus diesem Grunde gewinnen Brennstoffzellen in Kombination mit Elektromotoren zunehmend Bedeutung als Alternative für herkömmliche Verbrennungskraftmaschinen.

Die sogenannte Polymer-Elektrolyt-Brennstoffzelle (PEM-Brennstoffzelle) eignet sich aufgrund ihrer kompakten Bauweise, ihrer Leistungsdichte sowie ihres hohen Wirkungsgrades für den Einsatz als Energiewandler in Kraftfahrzeugen.

Das zentrale Bauelement einer PEM-Brennstoffzelle ist die sogenannte Membran-Elektroden-Einheit (MEE). Sie besteht aus einer Polymerelektrolytmembran, die auf beiden Seiten mit einer katalytisch aktiven Schicht versehen ist. Eine der Schichten ist als Anode für die Oxidation von Wasserstoff und die zweite Schicht als Kathode für die Reduktion von Sauerstoff ausgebildet. Um die gasförmigen Reaktionsmedien (Wasserstoff und Luft) an die katalytisch aktiven Schichten heranzuführen und gleichzeitig einen elektrischen Kontakt herzustellen, sind auf Anoden- und Kathodenschicht sogenannte Gasdiffusoren beziehungsweise Gasdiffusionsstrukturen aufgelegt. Hierbei handelt es sich gewöhnlich um Kohlefaserpapier oder Kohlevlies, die einen guten Zugang der Reaktionsgase zu den Elektroden und eine gute Ableitung des Zellenstroms ermöglichen. Aus diesen Membran-Elektroden-Einheiten werden PEM-Einzelzellen oder PEM-Zellenstapel aufgebaut.

Die Polymerelektrolytmembran besteht aus Protonen leitenden Polymermaterialien. Diese Materialien werden im folgenden auch kurz als lonomere bezeichnet. Bevorzugt wird Tetrafluorethylen-Fluorvinylether-Copolymer mit Sulfonsäuregruppen verwendet. Dieses Material wird zum Beispiel unter dem Handelsnamen Nafion® von E.I. du Pont vertrieben. Es sind jedoch auch andere, insbesondere fluorfreie lonomermaterialien, wie sulfonierte Polyetherketone oder Arylketone oder Polybenzimidazole einsetzbar. Für die Verwendung in Brennstoffzellen weisen diese Membranen im allgemeinen eine Dicke zwischen 10 und 200 µm auf.

Anode und Kathode enthalten sogenannte Elektrokatalysatoren, die die jeweilige Reaktion (Oxidation von Wasserstoff beziehungsweise Reduktion von Sauerstoff) katalytisch unterstützen. Als katalytisch aktive Komponenten werden bevorzugt die Metalle der Platingruppe des Periodensystems der Elemente eingesetzt. In der Mehrzahl werden sogenannte Trägerkatalysatoren verwendet, bei denen die katalytisch aktiven Platingruppenmetalle in hochdisperser Form auf die Oberfläche eines leitfähigen Trägermaterials aufgebracht wurden. Die mittlere Kristallitgröße der Platingruppenmetalle liegt dabei etwa zwischen 1 und 10 nm. Als Trägermaterialien haben sich feinteilige Ruße bewährt.

Es existieren viele unterschiedliche Verfahren zur Herstellung von Membran-Elektroden-Einheiten, wobei aber nur wenige für großtechnische Belange, das heißt für eine kontinuierliche Fertigung in hohen Stückzahlen zu wirtschaftlichen Kosten, geeignet sind.

In der DE 195 09 749 wird ein Verfahren zur kontinuierlichen Herstellung eines Verbundes aus Elektrodenmaterial, Katalysatormaterial und einer Festelektrolytmembran beschrieben, wobei aus einem das Elektrodenmaterial, das Katalysatormaterial und das Festelektrolytmaterial umfassenden katalytischen Pulver eine katalytische Schicht auf einem Träger hergestellt wird. Diese katalytische Schicht wird auf einer dem Träger abgewandten Seite zum Erweichen des Festelektrolytmaterials aufgeheizt und unter Druck auf die Festelektrolytmembran aufgewalzt.

Mit diesem Verfahren wird die Polymerelektrolytmembran ganzflächig beschichtet. Das Aufbringen der Elektroden in einem flächigen Muster, im folgenden auch als selektive Beschichtung bezeichnet, wie es für die Anfertigung von Brennstoffzellenstapel unbedingt erforderlich ist, ist nur mit einem hohen Aufwand zu verwirklichen. Hierzu werden auf die Membran entsprechend geformte Zwischenstücke aufgelegt, die eine Verbindung des Katalysatormaterials mit der Polymerelektrolytmembran verhindern. Mit einem Messer können dann anschließend die die Zwischenstücke überdeckenden Bereiche des Trägers nach dem Aufwalzen des Trägers auf die Membran herausgetrennt werden.

Dieses Verfahren ist darüber hinaus mit einem hohen Risiko einer Bildung von sogenannten Pinholes in der Membran verbunden, da das Material für die Elektrodenschichten in Pulverform eingesetzt wird. Bei Vorhandensein von gröberen Pulverpartikeln im katalytischen Material wird die thermisch erweichte Membran beim Aufwalzen des Pulvers unter hohem Druck durchlöchert.

In der WO 97/50142 wird ein kontinuierliches Verfahren zur Beschichtung einer Polymerelektrolytmembran mit Elektroden beschrieben, bei dem eine bandförmige polymere Membran durch ein Bad mit Platinsalzlösung gezogen wird. Das anhaftende Salz wird anschließend in einem Gasstrom oder in einem weiteren Bad zum Edelmetall reduziert. Mit diesem Verfahren kann die Polymerelektrolytmembran ebenfalls nur ganzflächig beschichtet werden. Durch die stark sauren Metallsalzlösungen und das Reduktionsbad kann die Membran beschädigt werden.

Weiterhin wird in der DE 195 48 421 ein Verfahren zur Herstellung einer Membran-Elektroden-Einheit beschrieben, wobei das Verbinden der Polymerelektrolytmembran, der Elektrodenschichten und der Gasdiffusionsschichten kontinuierlich in einem Walzverfahren durchgeführt wird. Die Polymermembran wird dabei ganzflächig mit den Elektrodenschichten beschichtet.

Die WO 97/23916 beschreibt unter anderem ebenfalls ein Verfahren zum kontinuierlichen Aufbringen von Elektrodenschichten auf Polymerelektrolytmembranen, wozu auch verschiedene Drucktechniken zum Einsatz kommen.

Es ist Aufgabe dervorliegenden Erfindung, ein kontinuierliches und kostengünstiges Verfahren zum Beschichten einer bandförmigen Polymerelektrolytmembran mit Elektrodenschichten in einem gewünschten Muster anzugeben, welches es außerdem gestattet, das erforderliche Muster auf einfache Weise und mit hoher Maßhaltigkeit zu erzeugen. Weiterhin soll die Gefahr der Bildung von Pinholes'in der Membran durch den Beschichtungsvorgang weitgehend vermieden werden.

Diese Aufgabe wird gelöst durch ein Verfahren zum kontinuierlichen, gleichzeitigen oder aufeinanderfolgenden. Bedrukken von Vorder- und Rückseite einer bandförmigen Polymerelektrolyt-Membran mit Elektrodenschichten in einem gewünschten Muster unter Verwendung einer einen'Elektrokatalysator enthaltenden Tinte und Trocknen der Elektrodenschichten bei erhöhter Temperatur unmittelbar nach jedem Druckvorgang, wobei das Bedrucken unter Einhaltung einer positionsgenauen Anordnung der Muster der Elektrodenschichten von Vorder- und Rückseite zueinander erfolgt. Das Verfahren ist dadurch gekennzeichnet,dass die Membran vor den Druckvorgängen einen Wassergehalt von 2 bis 20 Gew.-% besitzt.

Für den Einsatz im erfindungsgemäßen Verfahren wird von einer bandförmigen Polymerelektrolytmembran ausgegangen, die zum Beispiel als Rollenware angeliefert wird. Das Verfahren wird in einer Bandbeschichtungsanlage mit verschiedenen Stationen ausgeübt. Als minimale Ausstattung weist diese Anlage eine Abwickelvorrichtung, eine Druckstation, eine Trocknungsstation und eine Aufwickelvorrichtung sowie je nach Erfordernis mehrere Umlenk- und Führungsrollen auf.

Die Bandgeschwindigkeit kann in relativ weiten Grenzen variieren und ist nach oben nur durch die Randbedingungen des gewählten Druckverfahrens begrenzt. Nach Verlassen der Druckstation durchläuft das Polymerband mit den noch frischen Elektrodenschichten die Trocknungsstation. Die Elektrodenschichten werden also unmittelbar nach dem Druckvorgang bei erhöhter Temperatur getrocknet. Als Trocknungsstation kann zum Beispiel ein Umluft/Durchlauftrockner eingesetzt werden. Strahlungstrockner sind ebenfalls geeignet. Die bevorzugten Temperaturen für die Trocknung der Schichten liegen zwischen 60 und 150°C. Die Verweilzeit der Polymermembran in der Trocknungsstation muß eine ausreichende Trocknung der Elektrodenschichten gewährleisten. Sie hängt von der gewählten Temperatur ab und kann durch entsprechende Umlenkungen in der Trocknungsstation verlängert werden.

Der Druckvorgang erfolgt mit einer einen Elektrokatalysator enthaltenden Tinte. Häufig wird diese Tinte wegen ihrer Konsistenz auch als Paste bezeichnet. Sie enthält beispielsweise neben einem hochsiedenden Lösungsmittel einen oder verschiedene Elektrokatalysatoren, protonenleitendes lonomer sowie gegebenenfalls Hilfsstoffe wie Netzmittel, Porenbildner oder ähnliches. Zur Herstellung dieser Tinten werden die Komponenten mit Hilfe hoher Scherkräfte zu einem innigen Gemenge verarbeitet. Dies gewährleistet eine gute Dispergierung des Elektrokatalysators im Lösungsmittel. Für das erfindungsgemäße Verfahren geeignete Tinten und Pasten werden in DE 19611510 A1, P 19810485.5 (noch unveröffentlichte deutsche Patentanmeldung) und P 19837669.3 (noch unveröffentlichte deutsche Patentanmeldung) beschrieben.

Für das Bedrucken der Membran können verschiedene Druckverfahren angewendet werden, wie zum Beispiel Schablonendruck, Offset-, Tief-, Sieb- oder Tampondruck. Je nach verwendetem Druckverfahren und der gewünschten Schichtdicke der Elektrodenschichten muß die Konsistenz der Tinte entsprechend angepaßt werden, um optimale Ergebnisse zu erhalten. Die hierfür notwendigen Maßnahmen sind dem Fachmann bekannt. Die Schichtdikken für die Elektroden liegen im Bereich zwischen 5 und 100, bevorzugt zwischen 5 und 15 um. Wird die erforderliche Schichtdicke nicht mit einem Druckvorgang erreicht, so kann die Membran mehrfach bedruckt werden.

Abhängig vom verwendeten Druckverfahren können die beiden Seiten der Polymermembran gleichzeitig oder nacheinander bedruckt werden. So eignet sich zum Beispiel das Tiefdruckverfahren zur gleichzeitigen Beschichtung der Membran mit den Elektrodenschichten, während die beiden Seiten der Membran mit dem Siebdruckverfahren bevorzugt nacheinander beschichtet werden.

Die aufeinanderfolgende Beschichtung von Vorder- und Rückseite kann in einer Bandbeschichtungsanlage mit minimaler Ausstattung (eine Druckstation und eine Trocknungsstation) dadurch ausgeübt werden, daß die Membran zunächst nur einseitig beschichtet wird. Danach wird die Rolle mit der Polymermembran aus der Aufwickelvorrichtung entnommen und umgekehrt in die Abwickelvorrichtung eingesetzt, um in einem zweiten Durchlauf die Rückseite der Membran zu bedrucken. Alternativ hierzu kann die Bandbeschichtungsanlage durch eine zweite Druckstation und eine zweite Trocknungsstation ergänzt werden, um die Polymermembran in einem einzigen Durchlauf beidseitig beschichten zu können.

Hierbei muß darauf geachtet werden, daß die aufgedruckten Muster der Elektrodenschichten von Vorder- und Rückseite positionsgenau zueinander angeordnet sind. Die Maßgabe "positionsgenau" richtet sich hierbei nach den Anforderungen der sich anschließenden Konfektionierung der Brennstoffzellenstapel. Üblicherweise sind Toleranzen für die Deckungsgenauigkeit von Vorder- und Rückseitendruck von ±0,25 mm zulässig.

Die Maßnahmen zur Einhaltung der geforderten Positionsgenauigkeit sind zum einen drucktechnischer Art und daher jedem Druckfachmann geläufig. Zum anderen kann die Positionsgenauigkeit von Vorder- und Rückseitendruck durch weitere Maßnahmen verbessert werden. Hierzu gehört die Verwendung der Polymerelektrolytmembran in einer temperaturstabilen Form, welche durch Austausch der Protonen der Membran gegen einwertige, positiv geladene Ionen, wie zum Beispiel Kalium-, Natrium-, Ammonium- oder Tetrabutylammoniumionen, erhalten werden kann. Die höhere Temperaturstabilität vermindert das Risiko von Schädigungen der Membranstruktur durch die notwendigen Trocknungsprozesse und garantiert damit die Einhaltung einer guten Protonenleitfähigkeit.

Liegt die Polymermembran in einer azidischen Form vor, so kann sie in der Bandbeschichtungsanlage in eine temperaturstabile Form überführt werden. Hierzu wird in die Bandbeschichtungsanlage ein Ionen-Austauschbad vor die Druckstation eingefügt. Das Ionen-Austauschbad enthält je nach Erfordernis verdünnte Tetrabutylammoniumhydroxid-Lösung, Kalilauge, Natronlauge oder eine Ammoniaklösung. Nach dem Verlassen des Austauschbades wird eventuell noch anhaftende Flüssigkeit mit geeigneten Abstreifern entfernt.

Zur Einhaltung der Positionsgenauigkeit von Vorder- und Rückseitendruck wird der Wassergehalt der Membran in bestimmten Grenzen gehalten. Die Steuerung des Wassergehaltes der Membran während des Druckprozesses ermöglicht die Kontrolle der Schrumpfungs- und Ausdehnungseigenschaften der Membran und erhöht damit die Positionsgenauigkeit von Vorder- und Rückseitendruck. Die maximale Wasseraufnahmefähigkeit einer Polymerelektrolytmembran auf perfluorierter Sulfonsäurebasis liegt bei einem Wassergehalt von etwa 30 Gew.-%. Für das erfindungsgemäße Verfahren haben sich Wassergehalte von 2 bis 20, insbesondere von 10 bis 20 Gew.-%, bewährt.

Höhere Wassergehalte führen zu einer übermäßigen Ausdehnung der Membran verbunden mit einer Rißbildung und verringerter Haftung der Elektrodenschichten.

Zur Einstellung des Wassergehaltes der Membran kann ein Wässerungsbad in die Bandbeschichtungsanlage vor der Druckstation eingefügt werden. Die Temperatur des Wässerungsbades sollte in einem Bereich zwischen 20 und 95°C liegen. Der pH-Wert des Wässerungsbades richtet sich danach, in welcher Form die Polymermembran vorliegt. Für die azidische Form muß das Wässerungsbad einen pH-Wert im Bereich zwischen 1 und 5 aufweisen. Die ionenausgetauschte, temperaturstabile Form wird mit pH-Werten zwischen 7 und 9 gewässert. Alternativ hierzu besteht die Möglichkeit, den Wassergehalt der Membran durch Behandeln in einer feuchten Atmosphäre mit 50 bis 100% relative Feuchte und bei 40 bis 90°C einzustellen.

Wird eine azidische Membran eingesetzt, die erst in der Bandbeschichtungsanlage in die temperaturstabile Form überführt wird, so findet hierbei auch gleichzeitig die Einstellung eines bestimmten Wassergehaltes der Membran statt.

Für den Einsatz in Brennstoffzellen müssen die eventuell ionenausgetauschten Polymermembranen wieder in die azidische Form überführt werden. Dies geschieht gewöhnlich durch Behandeln der Membran in konzentrierter Schwefelsäure. Ein entsprechendes Bad kann in die Bandbeschichtungsanlage integriert werden. Hier zeigt sich zum Beispiel ein wesentlicher Vorteil des erfindungsgemäßen Verfahrens gegenüber dem in der DE 195 09 749 beschriebenen Verfahren, bei dem Elektrodenschichten und Gasdiffusionsstrukturen in einem Arbeitsgang auf die Polymermembran auflaminiert werden. Dieses Verfahren ist auf die Verwendung der Membran in der azidischen, weniger temperaturstabilen Form angewiesen, da es große Schwierigkeiten bereiten würde, die Membran durch die im allgemeinen hydrophoben Gasdiffusionsstrukturen hindurch mit Schwefelsäure zu reprotonieren.

Nach dem erfindungsgemäßen Verfahren können alle bekannten Polymermembranen mit Elektrodenschichten beschichtet werden. Bevorzugt wird eine Membran aus Tetrafluorethylen-Fluorvinylether-Copolymer mit Sulfonsäuregruppen verwendet.

Das erfindungsgemäße Verfahren wird an Hand der folgenden Figuren näher erläutert. Es zeigen
- **Figur 1:**: Mit Elektrodenschichten beidseitig beschichtete Polymerelektrolytmembran
- **Figur 2:**: Membran-Elektroden-Einheit
- **Figur 3:**: Auf Vorder- und Rückseite mit Elektrodenschichten bedruckte Polymermembran
- **Figur 4:**: Aufbau einer Bandbeschichtungsanlage mit einer Siebdruckstation
- **Figur 5:**: Bandbeschichtungsanlage von Figur 4 mit integriertem Wässerungsbad

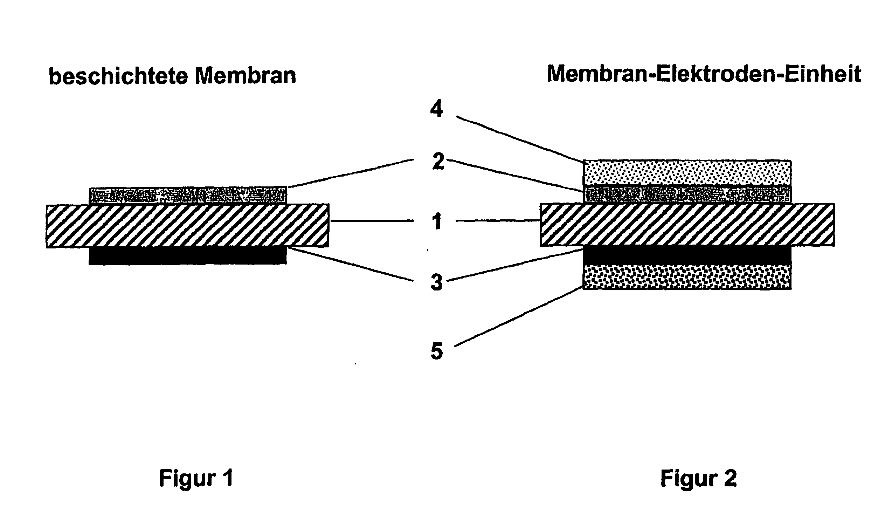

Figur 1 zeigt den Aufbau einer auf Vorder- und Rückseite beschichteten Polymermembran im Querschnitt. Figur 2 zeigt die Querschnittsdarstellung einer Membran-Elektroden-Einheit. Die Bezugsziffer (1) bezeichnet jeweils die Polymermembran. Bezugsziffer (2) bezeichnet die Anodenschicht und (3) die Kathodenschicht. Die Membran-Elektroden-Einheit von Figur 2 weist zusätzlich beidseitig aufgebrachte Gasverteilerstrukturen (4) für die Anode und (5) für die Kathode auf.

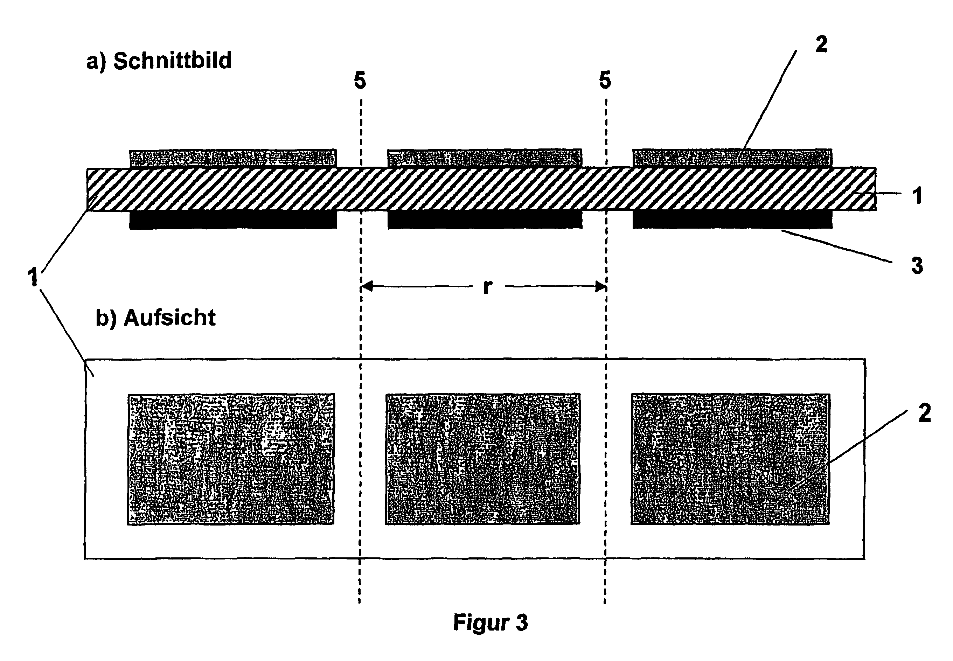

Figur 3 zeigt die Anordnung der aufgedruckten Elektrodenschichten (2) und (3) auf der Polymermembran (1). Die Elektroden von Figur 3 sind wegen ihrer Größe im Vergleich zu der Breite der Polymermembran nur in einem linearen, sich mit dem Rastermaß r wiederholenden, Muster angeordnet. Bei kleineren Elektroden oder größeren Breiten der Polymermembran können die Elektroden natürlich auch in einem zweidimensionalen Muster auf die Membran aufgedruckt werden.

Nachdem Vorder- und Rückseite der Membran mit den Elektroden bedruckt sind, werden die Membran-Elektroden-Einheiten durch Schneiden längs der Schnittlinien (5) vereinzelt.

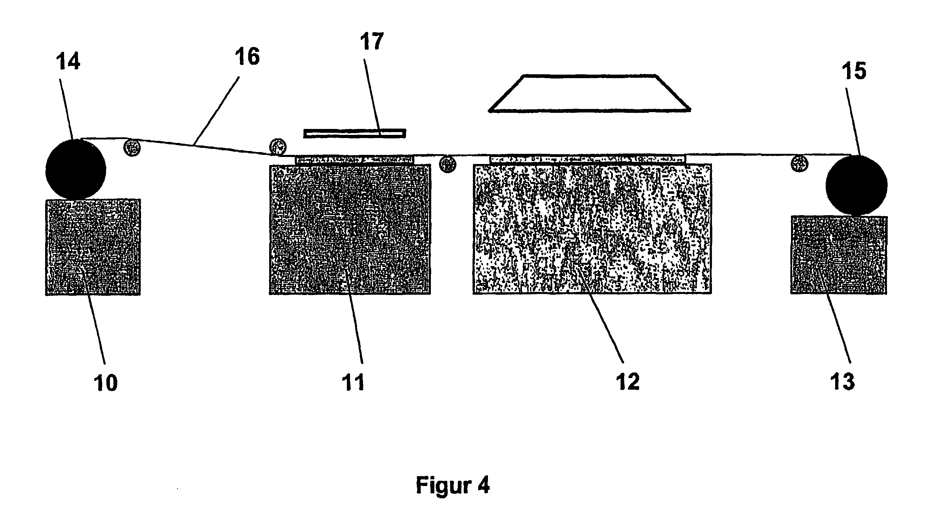

Figur 4 zeigt den prinzipiellen Aufbau einer Bandbeschichtungsanlage mit einer Siebdruckstation zur Durchführung des erfindungsgemäßen Verfahrens. (10) bezeichnet die Abwickelvorrichtung für die auf einer Rolle (14) angelieferte Polymermembran (16). Die Polymermembran wird durch die Siebdruckstation (11) mit dem Druckwerk (17) und anschließend durch den Durchlauftrockner (12) geführt, bevor sie auf die Rolle (15) der Aufwickelvorrichtung (13) aufgewickelt wird.

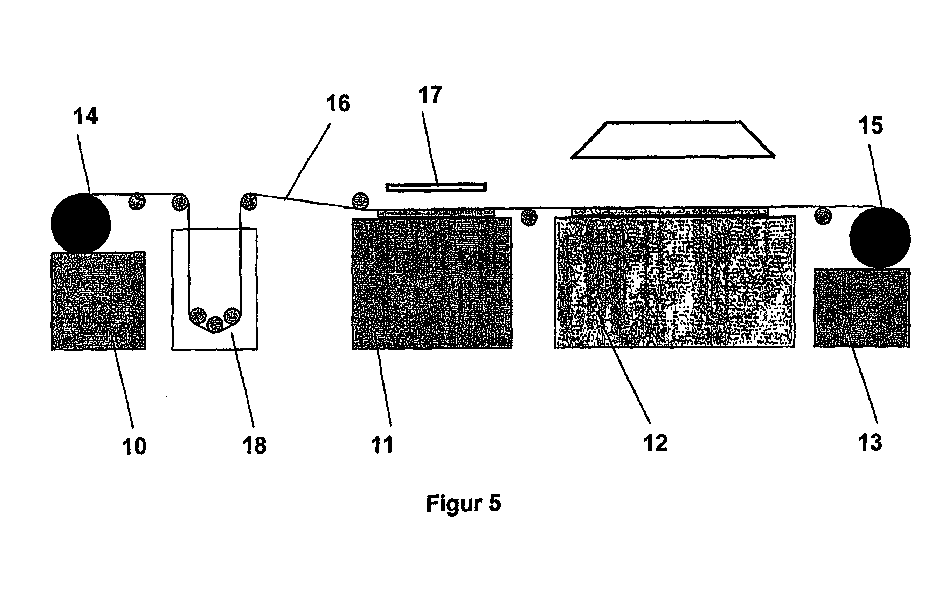

Zur Einstellung des Wassergehaltes der Polymermembran kann die Bandbeschichtungsanlage gemäß Figur 5 um ein Wässerungsbad (18) erweitert werden. Die notwendige Wässerungsdauer für die Einstellung eines bestimmten Wassergehaltes kann bei vorgegebener Bandgeschwindigkeit durch geeignete Umlenkrollen für die Polymermembran im Wässerungsbad verlängert werden.

Die Beschichtung einer Polymermembran mit den Katalysator-Elektroden gestaltet sich in der Bandbeschichtungsanlage nach Figur 5 wie folgt:

Die in Rollenform (14) angelieferte bandförmige Polymermembran wird in die Abwickelvorrichtung (10) eingehängt und durch die Beschichtungsanlage geführt. Es können alle Polymerelektrolytmembranen, die in Bandform erhältlich sind, verwendet werden. Bevorzugt werden Membranen aus Tetrafluorethylen-Fluorvinylether-Copolymer mit Sulfonsäuregruppen eingesetzt. Es sind jedoch auch andere, insbesondere fluorfreie lonomermaterialien, wie sulfonierte Polyetherketone oder Arylketone oder Polybenzimidazole verwendbar.

Länge und Breite der Rollen sind in weiten Grenzen variierbar. Für praktische Zwecke bewähren sich Längen bis zu 100 m bei Breiten von etwa 0,20 bis 1,50 m. Beispiele für fluorhaltige Membranmaterialien sind Nafion® 115, Nafion® 112, Gore select®, Flemion®. Auch mit Stützgewebe verstärkte Membranen, wie zum Beispiel Nafion® 450, können eingesetzt werden.

Die Membran wird zur Einstellung ihres Wassergehaltes durch das Wässerungsbad (18) gezogen, wobei die Verweilzeit im Bad und seine Temperatur so bemessen wird, daß die Membran einen Wassergehalt von 2 bis 20 Gew.-% aufnimmt. Der pH-Wert des Bades richtet sich nach der chemischen Form des vorliegenden Membranmaterials. Membranen in protonierter Form (H⁺-Form) werden in einem Säurebad behandelt (pH 1 bis 5), Membranen in alkalischer Form werden in neutralen oder alkalischen Bädern behandelt. Die optimalen Wassergehalte unterscheiden sich je nach Membrantyp und sind vor Durchführung der Beschichtung zu ermitteln.

Nach Durchlaufen des Wässerungsbades wird die oberflächlich anhaftende Flüssigkeit mit Hilfe von Abstreifern entfernt. In der Siebdruckstation (11) wird zunächst die Vorderseite der Membran mit Elektrodenschichten in den gewünschten Mustern (selektiv) beschichtet. Während des eigentlichen Druckvorganges wird die Polymermembran angehalten, bedruckt und anschließend um das Rastermaß des Beschichtungsmusters weiterbewegt. Dieser Vorgang wird so lange wiederholt, bis die gesamte Polymermembran beschichtet ist.

Die aufgedruckten Elektroden werden mittels des Durchlauftrockners (12) getrocknet, wobei die Trocknungstemperaturzwischen 60 und 150°C gewählt wird. Vorzugsweise verwendet man Heißluft- oder Infrarottrockner, die die Lösungsmittel schonend aus der Beschichtung entfernen. Die benötigte Trocknungszeit wird über die Durchlaufgeschwindigkeit des Polymerbandes geregelt.

An die Trocknung können sich weitere Druckvorgänge anschließen. Hierzu sind die entsprechenden Druckmaschinen in die Beschichtungsanlagen von Figur 4 oder 5 zu integrieren. So kann beispielsweise zunächst die Anodenseite und anschließend die Kathodenseite beschichtet werden. Es ist aber auch möglich, zur Erzielung dicker oder gradierter Schichten eine Seite mehrfach hintereinander zu beschichten.

Nach Durchlaufen der Beschichtungsanlage wird die bedruckte bandförmige Membran mit Hilfe des Bandaufwicklers (13) aufgerollt und der weiteren Verarbeitung (z.B. weitere Beschichtung, Schneiden, Laminieren mit Gasverteilerstrukturen, Verpacken usw.) zugeführt.

Im Falle der Beschichtungsanlagen gemäß Figur 4 oder 5 wird die Membran nach erfolgter Beschichtung wieder der Vorderseite der Abwickelvorrichtung (10) zugeführt und erneut beschichtet. Zur Beschichtung der Rückseite wird die Rolle vorher gewendet.

Zur Anfertigung der Anodenbeschichtungwird eine Tinte, beziehungsweise Paste, verwendet, die einen Elektrokatalysator enthält, der für die Wasserstoff-Oxidation geeignet ist, beispielsweise Platin oder andere Edelmetalle, geträgert auf einem hochoberflächigen Ruß. Zur Erhöhung der Resistenz gegenüber Verunreinigungen des Wasserstoffes mit Kohlenmonoxid können hier weitere Edelmetalle wie Ruthenium oder Palladium verwendet werden. Geeignete Katalysatoren werden in DE 19721437 und DE 19756880 beschrieben.

Für die Herstellung der Kathode wird ein Elektrokatalysator verwendet, der die Reduktion des Sauerstoffs katalysiert, insbesondere Platin oder geeignete Legierungen des Platins mit verschiedenen Übergangsmetallen. Hierfür geeignete Elektrokatalysatoren werden in DE 4426973 A1, DE 19517598 A1 und P 19848032.6 (noch unveröffentlichte deutsche Patentanmeldung) beschrieben.

Zur Anwendung in Brennstoffzellenstapel werden die mit Hilfe des beschriebenen Verfahrens hergestellten Membran-Elektroden-Einheiten (MEEs)auf Kathoden- und Anodenseite, gegebenenfalls nach Reprotonieren, durch Auflegen, Aufkleben oder Laminieren mit Gasverteilerstrukturen kombiniert.

Alternativ zu der beschriebenen Vorgehensweise kann es auch zweckmäßig sein, nur eine Seite der Polymermembran durch Bedrucken mit Elektrodenschichten zu versehen. Hierbei kann es sich entweder um die KathodenoderAnodenschichten handeln. Zur Anfertigung von Membran-Elektroden-Einheiten aus diesereinseitig beschichteten Membran wird sie, gegebenenfalls nach Reprotonieren, auf der beschichteten Seite durch Auflegen, Aufkleben oder Laminieren mit Gasverteilerstrukturen und auf der unbeschichteten Seite positionsgenau zu den aufgedruckten Elektrodenschichten mit katalysierten Gasdiffusionselektroden, welche auf einer Gasverteilerstruktur eine Elektrodenschicht enthalten, kombiniert.

Diese MEEs zeichnen sich durch eine hohe Leistungsdichte bei gleichzeitig niedriger Edelmetallbeladung aus. Typische Werte betragen 0,5 W/cm² bei einer Gesamt-Platinbeladung (Summe aus Anoden- und Kathodenbeladung) von 0,4 mg/cm². Dies entspricht einem Platinverbrauch von 0,8 g Pt/kW. Dieser Wert ermöglicht den Einsatz der MEEs für mobile und stationäre PEM-Anwendungen.

Die nachfolgenden Beispiele sollen das erfindungsgemäße Verfahren näher erläutern

Zur Anfertigung von Membran-Elektroden-Einheiten wurde eine Tinte gemäß DE 196 11 510 A1 mit folgender Zusammensetzung verwendet:

| | | |
|---|---|---|
| **Tinte:** | Katalysator 20% Pt auf Vulcan XC72 | 15,3 g |
| | Nafion-Polymer | 5,1 g |
| | Tetrabutylammoniumhydroxid | 2,0 g |
| | Li₂CO₃ | 5,5 g |
| | Glycerin | 127,7 g |
| | Alkohol, Wasser | 44,6 g |

### Beispiel 1:

Ein 10 Meter langes und 0,3 Meter breites Stück Polymerelektrolytfolie vom Typ Nafion® NE 1035 wurde in Form einer Rolle bereitgestellt. Der Wassergehalt der Membran betrug 2 Gew.-%. Die Membran lag in der Na⁺-Form vor. Die Membran wurde in einer Beschichtungsanlage nach Figur 4 mit den Elektrodenschichten bedruckt. Die Polymerelektrolytfolie wurde mittels der Abwickel- und Transportvorrichtung der Siebdruckstation zugeführt. In der Siebdruckstation wurde die Folie mit aufeinanderfolgenden Elektrodenschichten der Größe 14,9 cm x 24,7 cm unter Verwendung der oben spezifizierten Tinte bedruckt.

Die mittlere Durchlaufgeschwindigkeit der Membran durch die Beschichtungsanlage betrug 300 m/h. Die einzelnen Elektrodensegmentewurden mit einem gegenseitigen Abstand von 6 cm zueinander auf die Membran gedruckt.

Zur Trocknung der frisch aufgedruckten Elektrodenschichten wurde die Membran nach Verlassen der Siebdruckstation kontinuierlich durch einen Umluft-Durchlauftrockner geführt, in welchem die Lösungsmittelbestandteile der Drucktinte bei 90°C entfernt und die Elektrodenschichten fixiert wurden.

Hinter dem Durchlauftrockner wurde die einseitig beschichtete Polymerelektrolytfolie mittels der Aufwickelvorrichtung aufgerollt. Der geschilderte Vorgang wurde mehrfach wiederholt, bis die gewünschte Beladung von 0,2 mg Pt/cm² erreicht war.

Anschließend wurde die Rolle umgedreht, so daß die Rückseite der Polymerelektrolytfolie beschichtete werden konnte. Die Beschichtung der Rückseite wurde so durchgeführt, daß die beschichteten Segmente von Vorder- und Rückseite sich positionsgenau gegenüberlagen (siehe Figur3). Auch die Beschichtung der Rückseite wurde mehrfach wiederholt bis eine Beladung von 0,2 mg Pt/cm² erreicht war.

### Beispiel 2:

Mit einer gleichartigen Membran wie in Beispiel 1 wurde ein weiterer Beschichtungsversuch unternommen. Im Unterschied zu Beispiel 1 wurde der Wassergehalt der Membran vor der jeweiligen Beschichtung auf 20 Gew.-% eingestellt. Hierzu wurde in die Beschichtungsanlage von Figur 4 vor die Siebdruckstation ein Wässerungsbad eingefügt (siehe Figur 5). Die Temperatur des Wässerungsbades betrug 60°C.

Bis auf diesen Unterschied wurde die Beschichtung ganz analog zu Beispiel 1 vorgenommen.

### Beispiel 3:

Dieses Beispiel wurde ganz analog zu Beispiel 2 durchgeführt. Im Unterschied zu Beispiel 2 kam eine Polymermembran vom Typ Mafion® NE 112 zum Einsatz. Es handelt sich um eine Polymermembran in der azidischen H⁺-Form. Für die Beschichtung dieser Membran wurde eine Tinte analog der oben aufgeführten Zusammensetzung hergestellt, wobei jedoch Tetrabutylammoniumhydroxid weggelassen wurden. Die Trocknung der Elektrodenschichten erfolgte bei 70°C.

### Prüfung der Membran-Elektroden-Einheiten:

Aus den drei beschichteten Membranen wurde jeweils ein Segment herausgeschnitten und durch einstündige Behandlung in 0,5 M Schwefelsäure reprotoniert. Anschließend wurde jeweils ein 9 cm x 9 cm großes Stück der beschichteten Fläche ausgeschnitten, mit Gasverteilerstrukturen kombiniert und in eine PEM-Prüfzelle mit einer aktiven Fläche von 50 cm² eingebaut. Die Prüfung der Zelle erfolgte im Wasserstoff/Luft-Betrieb bei einem Gasdruck von 3 bar. Die Zelltemperatur betrug 75°C. Die Gasströme wurden bei 85°C (Anode) und 60°C (Kathode) befeuchtet. Die Gas-Stöchiometrie betrug 1,5 für Wasserstoff und 2,0 für Luft.

Die Meßergebnisse sind in der Tabelle 1 aufgeführt.

**Tabelle 1:**

| Beispiel | Zellspannung bei 0,5 A/cm² | Zellspannung bei 0,8 A/cm² |
|---|---|---|
| 1 | 660 mV | 527 mV |
| 2 | 665 mV | 555 mV |
| 3 | 692 mV | 587 mV |

Die obigen Meßergebnisse zeigen, daß sich das beschriebene Beschichtungsverfahren hervorragend dazu eignet, Membran-Elektroden-Einheiten in großen Stückzahlen kostengünstig und mit vergleichbaren Leistungsdaten wie bei Einzelanfertigung herzustellen.

## Patentansprüche

1. Verfahren zum kontinuierlichen, gleichzeitigen oder aufeinanderfolgenden Bedrucken von Vorder- und Rückseite einer bandförmigen Polymerelektrolyt-Membran mit Elektrodenschichten in einem gewünschten Muster unter Verwendung einer einen Elektrokatalysator enthaltenden Tinte und Trocknen der Elektrodenschichten bei erhöhter Temperatur unmittelbar nach jedem Druckvorgang, wobei das Bedrucken unter Einhaltung einer positionsgenauen Anordnung der Muster der Elektrodenschichten von Vorder- und Rückseite zueinander erfolgt,
**dadurch gekennzeichnet,**
**dass** die Membran vor den Druckvorgängen einen Wassergehalt von 2 bis 20 Gew.-% besitzt.

2. Verfahren nach Anspruch 1,
**dadurch gekennzeichnet,**
**daß** zum Bedrucken ein kontinuierlicher Schablonen-, Offset-, Tief-, Sieb- oder Tampondruck verwendet wird.

3. Verfahren nach einem der vorstehenden Ansprüche,
**dadurch gekennzeichnet,**
**daß** die Polymerelektrolyt-Membran in einer temperaturstabilen Form eingesetzt wird, die durch Austausch der Protonen gegen einwertige, positiv geladene Ionen erhältlich ist.

4. Verfahren nach einem der' Ansprüche 1 bis 3,
**dadurch gekennzeichnet,**
**daß** die Polymerelektrolyt-Membran in der azidischen Form eingesetzt und vor dem Bedrucken in die temperaturstabile Form durch Austausch der Protonen gegen einwertige, positiv geladene Ionen überführt wird.

5. Verfahren nach Anspruch 1,
**dadurch gekennzeichnet,**
**daß** der Wassergehalt der Membran durch Behandeln in einem wäßrigen Bad bei Temperaturen zwischen 20 und 95°C eingestellt wird.

6. Verfahren nach Anspruch 5,
**dadurch gekennzeichnet,**
**daß** der Wassergehalt der Membran durch Behandeln in einer feuchten Atmosphäre mit 50 bis 100% relativer Feuchte bei 40 bis 90°C eingestellt wird.

7. Verfahren nach Anspruch 1,
**dadurch gekennzeichnet,**
**daß** die Trocknung der aufgedruckten Elektrodenschichten bei Temperaturen von 60 bis 150°C vorgenommen wird.

## Claims

1. A process for continuously, simultaneously or consecutively printing the front and back of a polymer electrolyte membrane strip with electrode layers in a desired pattern, using an ink containing an electrocatalyst and drying the electrode layers at elevated temperature immediately after each printing operation, the printing taking place while maintaining accurate positioning of the patterns of the electrode layers on the front and back in relation to one another, wherein the membrane possesses a water content of 2 to 20 wt.% before the printing operations.

2. A process as claimed in claim 1, wherein continuous screen, offset, gravure or pad printing is used for the printing.

3. A process as claimed in one of the above claims, wherein the polymer- electrolyte membrane is used in a thermally stable form which is obtainable by exchanging the protons for monovalent, positively charged ions.

4. A process as claimed in one of claims 1 to 3, wherein the polymer electrolyte membrane is used in the acid form and is converted to the thermally stable form prior to printing by exchanging the protons for monovalent, positively charged ions.

5. A process as claimed in claim 1, wherein the water content of the membrane is adjusted by treating it in an aqueous bath at temperatures of between 20 and 95°C.

6. A process as claimed in claim 5, wherein the water content of the membrane is adjusted by treating it in a humid atmosphere with 50 to 100% relative humidity at 40 to 90°C.

7. A_process as claimed in claim 1, wherein the drying of the printed electrode layers takes place at temperatures of 60 to 150°C.

## Revendications

1. Procédé d'impression en continu, de manière simultanée ou successive de la face avant et de la face arrière d'une membrane d'électrolyte polymérique sous la forme d'un ruban avec des couches d'électrodes selon un modèle choisi en utilisant une encre contenant un électrocatalyseur et séchage des couches d'électrodes à température élevée directement après l'opération d'impression, cette impression se faisant en respectant un positionnement précis des modèles des couches d'électrodes de la face avant et de la face arrière,
**caractérisé en ce qu'**
avant les opérations d'impression, la membrane possède une teneur en eau comprise allant de 2 à 20 % en poids.

2. Procédé selon la revendication 1,
**caractérisé en ce que**
pour imprimer en continu, on utilise l'impression aux modèles, l'impression Offset, l'impression en taille douce, la sérigraphie et l'impression au tampon.

3. Procédé selon l'une des revendications précédentes,
**caractérisé en ce que**
la membrane d'électrolyte polymérique est utilisée sous la forme stable à la température, obtenue par échange des protons contre des ions monovalents, à charge positive.

4. Procédé selon l'une quelconque des revendications 1 à 3,
**caractérisé en ce qu'**
on met la membrane d'électrolyte polymérique sous forme acidique et avant l'impression, on l'a fait passer dans une forme stable à la température, par échange des protons contre des ions monovalents, à charge positive.

5. Procédé selon la revendication 1,
**caractérisé en ce qu'**
on règle la teneur en eau de la membrane par traitement dans un bain aqueux à des températures comprises entre 20°C et 95°C.

6. Procédé selon la revendication 5,
**caractérisé en ce qu'**
on règle la teneur en eau de la membrane par traitement dans une atmosphère humide avec une humidité relative de 50 à 100 % à une température de 40 à 90°C.

7. Procédé selon la revendication 1,
**caractérisé en ce qu'**
on sèche les couches d'électrodes imprimées à des températures comprises entre 60°C et 150°C.
